# EUROPÄISCHE PATENTSCHRIFT

(11) **EP 4 073 359 B1**
(45) Veröffentlichungstag und Bekanntmachung des Hinweises auf die Patenterteilung: **07.02.2024**
(21) Anmeldenummer: 20820383.6
(22) Anmeldetag: 04.12.2020
(51) Int. Cl.: F01N 3/20

(54) **VORRICHTUNG ZUR ABGASNACHBEHANDLUNG MIT EINER RINGFÖRMIGEN HEIZSCHEIBE**
APPARATUS FOR EXHAUST GAS AFTERTREATMENT HAVING AN ANNULAR HEATED DISC
APPAREIL DE POST-TRAITEMENT DE GAZ D'ÉCHAPPEMENT AYANT UN DISQUE CHAUFFÉ ANNULAIRE

(30) Priorität: 09.12.2019 DE 102019219157
(43) Veröffentlichungstag der Anmeldung: 19.10.2022
(73) Patentinhaber: Vitesco Technologies GmbH, 93055 Regensburg (DE)
(72) Erfinder: DUNG, Sebastian, 81737 München (DE); HIRTH, Peter, 81737 München (DE)
(74) Vertreter: Vitesco Technologies
(86) Internationale Anmeldenummer: PCT/EP2020/084624
(87) Internationale Veröffentlichungsnummer: WO 2021/115950

(56) Entgegenhaltungen:
- EP-A1- 3 406 873
- DE-B3-102015 111 689
- GB-A- 746 266
- US-A- 5 546 746
- US-A- 5 672 324

## Beschreibung

### Technisches Gebiet

Die Erfindung betrifft eine Vorrichtung zur Nachbehandlung von Abgasen einer Emissionsquelle, insbesondere eines Verbrennungsmotors, mit einer ersten rohrförmigen Strömungsstrecke, einem Umlenkbereich und einer zweiten ringförmigen Strömungsstrecke, wobei die ringförmige Strömungsstrecke zwischen einer die rohrförmige Strömungsstrecke begrenzenden Innenwandung und einer die ringförmige Strömungsstrecke begrenzenden Außenwandung ausgebildet ist, wobei in der ringförmigen Strömungsstrecke zumindest ein ringförmiger Wabenkörper angeordnet ist, und wobei zumindest eine ringförmige Heizscheibe in der ringförmigen Strömungsstrecke angeordnet ist.

### Stand der Technik

Zur Abgasnachbehandlung von Abgasen von Emissionsquellen, wie insbesondere Verbrennungsmotoren, sind Katalysatoren bekannt, welche dazu beitragen die im Abgas mitgeführten Schadstoffe chemisch umzuwandeln. Katalysatoren weisen hierzu durchströmbare Wabenkörper auf, die mit einer katalytisch aktiven Beschichtung versehen sind. Im Stand der Technik ist eine Vielzahl von unterschiedlichen Bauformen solcher Katalysatoren bekannt.

Eine spezielle Bauform bildet der sogenannte Ringkatalysator. Dieser weist eine zentrale rohrförmige Strömungsstrecke auf, einen Umlenkbereich und eine ringförmige Strömungsstrecke. Die beiden Strömungsstrecken können Matrizen aufweisen, die als durchströmbarer Wabenkörper dienen. Bevorzugt sitzt ein solcher Wabenkörper in der ringförmigen Strömungsstrecke, während die rohrförmige Strömungsstrecke und der Umlenkbereich als zusätzliche Vermischungsstrecke für das strömende Abgas dienen.

Zur weiteren Verbesserung der Abgasnachbehandlung sind Heizelemente bekannt, welche von dem Abgas umströmt werden, wodurch einerseits das Abgas aufgeheizt wird und weiterhin auch die die Heizelemente umgebenden Strukturen aufgeheizt werden. Ein solches Heizelement, insbesondere in Form einer Heizscheibe, wird dem Wabenkörper beispielsweise in Strömungsrichtung vor- oder nachgelagert oder bei einem geteilten Wabenkörper auch in dessen Mitte angeordnet.

Die EP 3 406 873 A1 offenbart ein Abgasnachbehandlungssystem für einen Verbrennungsmotor mit Ringkatalysator und einem in der Abgasanlage des Verbrennungsmotors stromabwärts des Ringkatalysator angeordneten Katalysator zur selektiven katalytischen Reduktion von Stickoxiden. Der Ringkatalysator weist ein zentrisches Rohr und einen das zentrische Rohr zumindest abschnittsweise umhüllenden äußeren Ringspalt auf, wobei ein Abgasstrom des Verbrennungsmotors über den Ringspalt zuströmt und durch das zentrische Rohr des Ringkatalysators abströmt. An dem Ringkatalysator ist ein Dosierelement angeordnet, mit welchem ein Reduktionsmittel in den Abgasstrom eindosiert wird. In dem zentrischen Rohr vermischen sich der Abgasstrom und das Reduktionsmittel, wobei ein elektrisches Heizelement vorgesehen ist, um das Abgas vor Eintritt in den Katalysator zur selektiven, katalytischen Reduktion zu erhitzen.

Die GB 746 266 A offenbart ein Kontaktelement, welches aus spiralförmigen Spulen besteht, die parallel und mit geringem Abstand zueinander angeordnet sind, wobei die Windungen der einen Spule mit den Zwischenräumen zwischen den Windungen der anderen Spule fluchten. Die Spulen bestehen aus einem durchgehenden Drahtstück und sind in ihrer Mitte durch eine Schleife verbunden.

Die US 5 672 324 A offenbart ein elektrisches Heizgerät, welches aus einer Mittelelektrode und einer Ringelektrode besteht. Zwischen den Elektroden ist ein wabenförmiger Wärmeerzeuger angeordnet. Der wabenförmige Wärmeerzeuger wird durch Wickeln eines leitfähigen Folienstreifens um die Mittelelektrode gebildet. Die Oberfläche des leitenden Folienstreifens ist mit einem isolierenden Material beschichtet, wodurch ein Kurzschluss zwischen zwei Schichten des um die Mittelelektrode gewickelten leitenden Folienstreifens verhindert wird.

Nachteilig an den Vorrichtungen im Stand der Technik ist insbesondere, dass der Aufbau der Heizscheibe selbst und die Ausführung der elektrischen Durchführungen nicht optimal für den Einsatz in einem Ringkatalysator sind. Insbesondere die elektrische Kontaktierung der Heizscheibe mittels zwei getrennten elektrischen Durchführungen für die beiden Pole ist bislang unzureichend gelöst.

### Darstellung der Erfindung, Aufgabe, Lösung, Vorteile

Daher ist es die Aufgabe der vorliegenden Erfindung eine Vorrichtung zur Abgasnachbehandlung zu schaffen, welche es ermöglicht die Vorteile einer elektrischen Zusatzheizung mit den spezifischen Vorteilen eines Ringkatalysators zu kombinieren und insbesondere die elektrische Durchführung und Kontaktierung zu verbessern.

Die Aufgabe hinsichtlich der Vorrichtung wird durch eine Vorrichtung mit den Merkmalen von Anspruch 1 gelöst.

Ein Ausführungsbeispiel der Erfindung betrifft eine Vorrichtung zur Nachbehandlung von Abgasen einer Emissionsquelle, insbesondere eines Verbrennungsmotors, mit einer ersten rohrförmigen Strömungsstrecke, einem Umlenkbereich und einer zweiten ringförmigen Strömungsstrecke, wobei die ringförmige Strömungsstrecke zwischen einer die rohrförmige Strömungsstrecke begrenzenden Innenwandung und einer die ringförmige Strömungsstrecke begrenzenden Außenwandung ausgebildet ist, wobei in der ringförmigen Strömungsstrecke zumindest ein ringförmiger Wabenkörper angeordnet ist, und wobei zumindest eine ringförmige Heizscheibe in der ringförmigen Strömungsstrecke angeordnet ist, wobei die Heizscheibe mittels zumindest zweier elektrischer Durchführungen, welche an der Außenwandung angeordnet sind, elektrisch kontaktierbar ist, wobei die Heizscheibe aus zwei Heizscheibenhälften gebildet ist.

Der elektrische Leiter ist im einfachsten Fall ein Metalldraht, welcher unter Ausnutzung des Ohmschen Widerstands erhitzt werden kann. Alternativ kann der Leiter selbst auch als Wabenkörper ausgebildet sein, der insbesondere eine sehr große Länge im Vergleich zu seiner Höhe und Tiefe aufweist.

Über die beiden elektrischen Durchführungen wird der Leiter mit dem Pluspol und dem Minuspol einer Spannungsquelle verbunden. Die Nutzung des Gehäuses des Katalysators oder anderer Strukturen als Rückleiter ist somit nicht notwendig. Dies ist insbesondere im Hinblick auf höhere Bordspannungen vorteilhaft und notwendig, um beispielsweise Stromschläge an Personen zu vermeiden oder andere kritische Spannungsunfälle.

Die elektrischen Durchführungen sind an der Außenwandung angeordnet und ragen vorteilhafterweise nicht tief in die Heizscheibe hinein. Somit wird sichergestellt, dass nicht mehr durchströmbare Querschnittsfläche als unbedingt erforderlich durch die Heizscheibe verdeckt wird.

Aufgrund der baulichen Besonderheiten des Ringkatalysators mit einer von Abgas durchströmbaren rohrförmigen Strömungsstrecke ist die Anordnung einer elektrischen Durchführung an der Innenwandung nicht möglich, beziehungsweise nur mit sehr hohem Aufwand zu realisieren. Die elektrischen Durchführungen sind in Umfangsrichtung der Außenwandung versetzt zueinander angeordnet.

Die Heizscheibenhälften zeichnen sich insbesondere dadurch aus, dass die Trennung der Heizscheibe in die beiden Hälften innerhalb der Ebene der Heizscheibe erfolgt. Es gibt somit keine Anordnung der Hälften in axialer Richtung betrachtet nacheinander.

Besonders vorteilhaft ist es, wenn die Heizscheibe durch zumindest einen elektrischen Leiter gebildet ist, welcher in einem die Heizscheibe definierenden scheibenförmigen Bereich innerhalb der ringförmigen Strömungsstrecke angeordnet ist. Bevorzugt ist der Leiter in einem in axialer Richtung der ringförmigen Strömungsstrecke, also in der Hauptdurchströmungsrichtung, begrenzten Bereich in einer Ebene innerhalb der ringförmigen Strömungsstrecke angeordnet.

Der Leiter kann nicht erfindungsgemäß beispielsweise spiralförmig aufgewickelt sein. Insbesondere können auch zwei Leiterelemente von je einer der elektrischen Durchführungen aus in die ringförmige Strömungsstrecke hineinragen, wobei die beiden Leiter dann an ihren freien Enden in der Strömungsstrecke elektrisch leitend miteinander verbunden sind. Alternativ kann auch ein Leiter einen Umlenkpunkt aufweisen, an welchem er derart gebogen ist, dass die Wicklungsrichtung umgekehrt wird.

Auch ist es vorteilhaft, wenn jedes der beiden Enden des Leiters mit jeweils einer der elektrischen Durchführungen in elektrisch leitendem Kontakt steht. Auf diese Weise kann ein geschlossener Stromkreis vom Pluspol zum Minuspol der außerhalb angeordneten Spannungsquelle geführt werden.

Ein nicht erfindungsgemäßes Ausführungsbeispiel ist dadurch gekennzeichnet, dass die elektrischen Durchführungen direkt benachbart zueinander an der Außenwandung angeordnet sind. Insbesondere sind die elektrischen Durchführungen in axialer Richtung in einer gemeinsamen Ebene angeordnet und lediglich in Umfangsrichtung zueinander versetzt.

Auch ist es nicht erfindungsgemäß, wenn der Leiter spiralförmig aufgewickelt ist. Eine spiralförmig Aufwicklung ist insbesondere vorteilhaft, um eine möglichst gleichmäßige Aufheizung über den gesamten Strömungsquerschnitt hinweg ermöglichen zu können. Darüber hinaus ist das spiralförmige Aufwickeln leicht realisierbar.

Darüber hinaus ist es nicht erfindungsgemäß, wenn der Leiter Wellenförmig in der ringförmigen Strömungsstrecke angeordnet ist, wobei die Wellenberge des Leiters benachbart aber beabstandet zur Außenwandung angeordnet sind und die Wellentäler des Leiters benachbart aber beabstandet zur Innenwandung angeordnet sind.

Durch den Wellenförmigen Verlauf des Leiters zwischen der Außenwandung und der Innenwandung kann in einer Aufsicht ein blumenartiger Querschnitt erreicht werden, wodurch ebenfalls eine gute Aufheizung erreicht werden kann. Der Leiter führt hier von der ersten elektrischen Durchführung immer zwischen Außenwandung und Innenwandung hin und her und weist jeweils an den Wandungen Umkehrpunkte auf. Die Wellbreite und die Wellhöhe können bedarfsgerecht eingestellt werden. Durch eine hohe Wellhöhe und geringe Wellbreite kann die insgesamt verbaute Länge des elektrischen Leiters erhöht werden.

Weiterhin ist es nicht erfindungsgemäß, wenn die Heizscheibe durch zwei in Strömungsrichtung hintereinanderliegende Bereiche gebildet ist. Die Heizscheibe kann auch aus mehreren in axialer Richtung hintereinander angeordneten Bereichen gebildet sein. So ist auch die Anordnung von zwei elektrischen Leitern in axialer Richtung hintereinander möglich.

Auch ist es nicht erfindungsgemäß, wenn die beiden Bereiche jeweils einen elektrischen Leiter aufweisen, wobei jeder Leiter endseitig mit einer elektrischen Durchführung verbunden ist, wobei die elektrischen Leiter der beiden Bereiche an zumindest einer Stelle, insbesondere an deren freien Endbereich, elektrisch leitend miteinander verbunden sind.

In einer vorteilhaften Ausgestaltung ist die Heizscheibe aus zwei einzelnen Heizscheibenelementen gebildet, die jeweils einen innerhalb der ringförmigen Strömungsstrecke angeordneten Leiter aufweisen, der mit einem seiner Enden mit einer elektrischen Durchführung verbunden ist. Der Leiter jedes Heizscheibenelementes ist dabei spiralförmig in einer eigenen Ebene aufgewickelt. Die jeweils freien Endbereiche der Leiter sind mittels einer elektrisch leitfähigen Brücke miteinander leitend verbunden.

Die beiden Heizscheibenelemente können gleichsinnig oder gegensinnig gewickelte Leiter aufweisen. In einem Ausführungsbeispiel sind die beiden Heizscheibenelemente identisch und werden spiegelverkehrt zueinander eingesetzt, um zu erreichen, dass die beiden Leiter gegensinnig gewickelt zueinander ausgerichtet sind.

Weiterhin ist es zweckmäßig, wenn die Heizscheibenhälften an mit den elektrischen Durchführungen leitend verbundenen elektrisch leitfähigen Brückenelementen miteinander verbunden sind. Dies ist vorteilhaft, um sicherzustellen, dass keine ungewollten Kurzschlüsse zwischen den beiden elektrischen Polen der Spannungsquelle erzeugt werden und weiterhin es nicht zu ungewollten Hitzemaxima, etwa infolge ungünstiger Strompfade, kommt. Die Brückenelemente sind jeweils elektrisch leitfähig mit einer der elektrischen Durchführungen verbunden. Zwischen den beiden Brückenelementen sind dann jeweils mehrere Abschnitte des elektrischen Leiters aufgespannt, so dass zwischen den Brückenelementen jeweils mehrere unterschiedliche Strompfade ausgebildet werden.

Auch ist es nicht erfindungsgemäß, wenn die elektrischen Durchführungen in Strömungsrichtung zueinander versetzt angeordnet sind.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von technischen Beispielen unter Bezugnahme auf die Zeichnungen detailliert erläutert. In den Zeichnungen zeigen:
- Fig. 1: eine Ansicht einer Heizscheibe, wobei zwei Teile des Leiters mit einer elektrisch leitfähigen Brücke verbunden sind,
- Fig. 2: eine Ansicht einer Heizscheibe, wobei der Leiter eine Biegung auf-weist, welche einen Umlenkpunkt definiert,
- Fig. 3: eine Ansicht einer Heizscheibe, wobei der Leiter blumenartig in der ringförmigen Strömungsstrecke angeordnet ist,
- Fig. 4: eine Ansicht einer Heizscheibe mit einem spiralförmig gewickelten Leiter,
- Fig. 5: zwei Ansichten einer Ausführungsform mit einer Heizscheibe, die zwei in Strömungsrichtung hintereinanderliegende Bereiche aufweist,
- Fig. 6: zwei Ansichten von erfindungsgemäßen Heizscheiben, wobei die Heizscheiben jeweils aus zwei Heizscheibenhälften gebildet sind, und
- Fig. 7: zwei Ansichten einer Heizscheibe, wobei die elektrischen Durchführungen der Heizscheibe in axialer Richtung versetzt zueinander angeordnet sind.

### Bevorzugte Ausführung der Erfindung

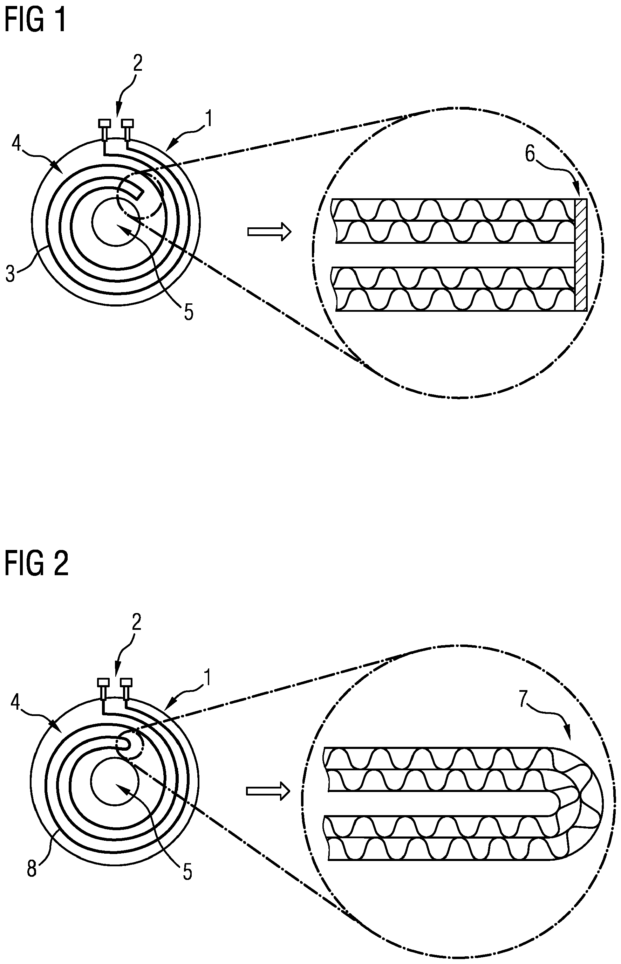

Die Figur 1 zeigt auf der linken Seite eine Heizscheibe 1 mit zwei an der Außenwandung angeordneten elektrischen Durchführungen 2. Der elektrische Leiter 3 ist im Inneren der ringförmigen Strömungstrecke 4 angeordnet, welche zwischen der Innenwandung der rohrförmigen Strömungstrecke 5 und der Außenwandung der ringförmigen Strömungsstrecke 4 angeordnet ist.

Der elektrische Leiter 3 ist spiralförmig innerhalb der ringförmigen Strömungsstrecke 4 aufgewickelt. Der Leiter 3 ist elektrisch kontaktierend mit beiden elektrischen Durchführungen 2 verbunden. Elektrische Durchführungen im Allgemeinen sind im Stand der Technik bekannt. Für eine erfindungsgemäße Nutzung ist insbesondere eine geeignete Durchführung zu wählen, welche für Bordnetzspannungen von vorzugsweise 48 Volt und höher geeignet ist.

In der Figur 1 ist der elektrische Leiter 3 aus zwei Teilabschnitte gebildet, die an ihrem freien Ende, also dem Ende, welches nicht mit der elektrischen Durchführung verbunden ist, mittels eines elektrisch leitfähigen Verbindungsmittels 6 miteinander verbunden sind. Das Verbindungsmittel 6 stellt den Umkehrpunkt des Leiters 3 dar. Ab diesem verläuft die spiralförmige Wicklung richtungsverkehrt wieder vom radial inneren Bereich der ringförmigen Strömungsstrecke 4 zum radial äußeren Bereich.

Im rechten Bereich der Figur 1 ist eine Detailansicht dieses Umkehrpunktes dargestellt. Hier ist auch zu erkennen, dass der Leiter 3 auch aus aufgewickelten Metallfolien gebildet sein kann. Hier wird zur Erzeugung des elektrischen Leiters das gleiche Verfahren verwendet, wie es beispielsweise zur Herstellung von Matrizen für Katalysatoren verwendet wird. In einer vorteilhaften Ausgestaltung kann der elektrische Leiter auch eine katalytische Wirkung aufweisen.

Figur 2 zeigt einen ähnlichen Aufbau wie Figur 1, daher werden identische Bezugszeichen für identische Teile verwendet.

Der elektrische Leiter 8 weist grundsätzlich einen ähnlichen Aufbau auf, wie der Leiter 3 der Figur 1. Anstelle eines zweiteiligen Aufbaus mit einem Verbindungsmittel 6 ist der Leiter 8 hier einteilig aufgebaut und die Richtungsumkehr wird durch eine entsprechende Biegung 7 beziehungsweise Faltung des Leiters 8 erzeugt.

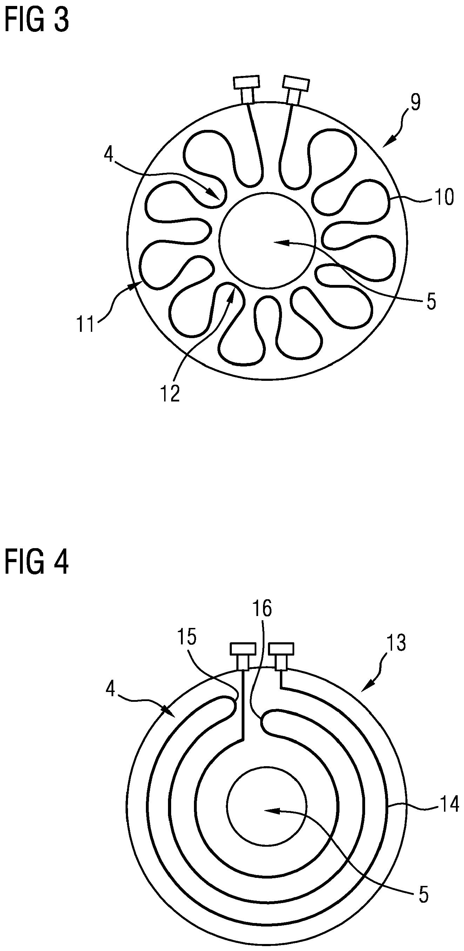

Figur 3 zeigt eine Heizscheibe 9 mit einem elektrischen Leiter 10, Der Leiter 10 ist gewellt angeordnet. Die Wellung verläuft von der Außenwandung der ringförmigen Strömungsstrecke 4 zur Innenwandung der rohrförmigen Strömungsstrecke 5 in Umfangsrichtung umlaufend entlang der ringförmigen Strömungsstrecke 5. Die Wellenberge 10 sind hierbei benachbart zur Außenwandung angeordnet, während die Wellentäler 12 benachbart zur Innenwandung angeordnet sind. Insbesondere sind sowohl die Wellenberge 10 als auch die Wellentäler 12 nicht in direkter Anlage mit der Außenwandung beziehungsweise der Innenwandung. Auf diese Weise wird ein in Umfangsrichtung umlaufender Luftspalt zwischen dem elektrischen Leiter 10 und der Außenwandung beziehungsweise der Innenwandung erzeugt. Im Bereich der elektrischen Durchführung kreuzt der elektrische Leiter 10 diesen Spalt. Die Wellhöhe, die Öffnungsweite sowie die Form der Wellung können bedarfsgerecht angepasst werden.

Figur 4 zeigt eine Ansicht einer Heizscheibe 13, wobei der Leiter 14 spiralförmig innerhalb der ringförmigen Strömungsstrecke 4 angeordnet ist. Der Leiter 14 weist zumindest zwei Umlenkpunkte 15, 16 auf, nach welchen der Verlauf des Leiters 14 jeweils gegensinnig zum Abschnitt davor ist. Der Leiter 14 ist somit verschlungen. Der Leiter 14 ist derart angeordnet, dass der spiralförmige und verschlungene Abschnitt von radial außen nach radial innen verläuft, wobei ein weiterer Abschnitt des Leiters 14 geradlinig von radial innen nach radial außen verläuft und dort endseitig mit einer der elektrischen Durchführungen kontaktiert ist.

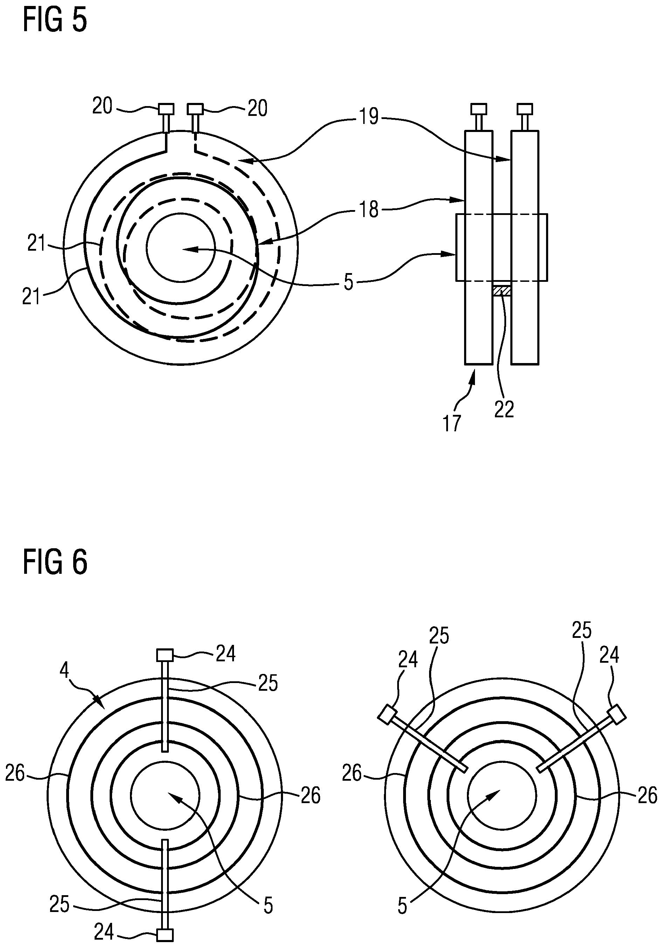

Figur 5 zeigt eine weitere Ausführungsform einer Heizscheibe 17. Die Heizscheibe 17 ist in zwei entlang der axialen Richtung, also der Hauptdurchströmungsrichtung, hintereinander angeordnete Bereiche 18, 19 aufgeteilt. Jeder dieser Bereiche 18, 19 weist jeweils eine elektrische Durchführung 20 auf, weiterhin einen spiralförmig gebogenen Leiter 21. Die beiden Bereiche 18, 19, beziehungsweise die Leiter 21 sind mittels eines elektrischen Verbindungsmittels 22 an ihrem freien Endbereich miteinander elektrisch leitend verbunden.

Die Bereiche 18, 19 sind in axialer Richtung beabstandet zueinander angeordnet. Dies kann beispielsweise mittels elektrisch isolierender Stützstifte bewerkstelligt werden, welche beispielsweise in die Wabenstruktur der Leiter eingesteckt werden.

Durch die elektrisch leitfähige Verbindung mittels des Verbindungsmittels 22 wird ein gemeinsamer elektrischer Leiter 21 über die beiden Bereiche 18, 19 hinweg erzeugt, der mit den beiden elektrischen Durchführungen 20 zusammen eine funktionale Heizscheibe 17 bildet. Aufgrund der Anordnung des Leiters 21 in zwei Ebenen, einmal im Bereich 18 und einmal im Bereich 19, kann eine größere Heizleistung erzeugt werden.

Die Leiter 21 können in ihren jeweiligen Bereichen gleichsinnig oder gegensinnig angeordnet sein. Im einfachsten Falle werden zwei identische einzelne Heizscheiben erzeugt, wobei eine spiegelverkehrt zu der anderen angeordnet wird. Dies macht insbesondere die Herstellung der die Bereiche 18, 19 bildenden Heizscheiben einfach und kostengünstig.

Figur 6 zeigt zwei Ausführungen einer erfindungsgemäßen Heizscheibe 23. Die Heizscheiben 23 weisen jeweils zwei elektrische Durchführungen 24 auf. Im linken Ausführungsbeispiel sind diese um 180 Grad in Umfangsrichtung versetzt zueinander angeordnet. Im rechten Ausführungsbeispiel sind die Durchführungen 24 um etwa 90 Grad in Umfangsrichtung zueinander versetzt angeordnet.

An die Durchführungen 24 ist im Inneren jeweils ein elektrisch leitfähiges Brückenelement 25 angebunden. Diese Brückenelemente stellen die elektrisch leitende Verbindung mit dem eigentlichen Heizleiter 26 her, der in der ringförmigen Strömungsstrecke angeordnet ist.

Die Leiter 26 verlaufen zwischen den Brückenelementen 25 und sind zueinander jeweils beabstandet angeordnet. Dadurch ergibt sich ein Stromfluss durch eine der Durchführungen 24 entlang des jeweils angeschlossenen Brückenelementes 25 in zu den Leitern 26 hin zu dem jeweils anderen Brückenelement 25 und schließlich hin zur zweiten Durchführung 24.

Die Leiter 26 können vor der Montage in der ringförmigen Strömungsstrecke jeweils mit einem der Brückenelemente 25 fest verbunden sein, während sie mit den jeweils anderen Brückenelement 25 jeweils nach dem Einsetzen fest verbunden werden, beispielsweise durch Verlöten.

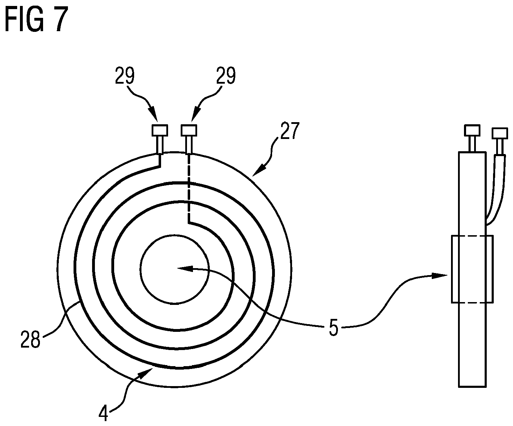

Die Figur 7 zeigt eine alternative Ausgestaltung einer Heizscheibe 27. Der Leiter 28 ist ebenfalls spiralförmig innerhalb der ringförmigen Strömungsstrecke 4 angeordnet. Im Gegensatz zu den zuvor gezeigten Ausführungsbeispielen liegen hier die elektrischen Durchführungen 29 nicht in einer gemeinsamen Ebene, sondern sind entlang der axialen Richtung versetzt zueinander angeordnet.

Der Leiter 28 verläuft von einer der Durchführungen 29 spiralförmig in einer Ebene mit dieser Durchführung 29 von radial außen nach radial innen. Dort wird der Leiter 28 in axialer Richtung ausgelenkt und schließlich zur anderen Durchführung 29, welche axial versetzt zur ersten Durchführung 29 angeordnet ist, geführt.

Im rechten Bereich ist eine Seitenansicht der Heizscheibe gezeigt, in welcher zu erkennen ist, wie der Leiter 28 aus der Hauptebene, in welcher er spiralförmig angeordnet ist, ausgelenkt wird und zur Durchführung 29 geführt wird.

Die unterschiedlichen Merkmale der einzelnen Ausführungsbeispiele können auch untereinander kombiniert werden. Insbesondere der Aufbau, die Anordnung und die Kontaktierung des Leiters, der Durchführungen, der Verbindungsmittel und der Brücken können untereinander im Rahmen technischer Möglichkeiten kombiniert werden.

Die Beispiele der Figuren 1 bis 5 und 7 weisen nicht den erfindungsgemäßen Gegenstand auf, und das erfindungsgemäße Ausführungsbeispiel der Figur 6 weist insbesondere keinen beschränkenden Charakter auf und dient der Verdeutlichung des Erfindungsgedankens.

## Patentansprüche

1. Vorrichtung zur Nachbehandlung von Abgasen einer Emissionsquelle, insbesondere eines Verbrennungsmotors, mit einer ersten rohrförmigen Strömungsstrecke (5), einem Umlenkbereich und einer zweiten ringförmigen Strömungsstrecke (4), wobei die ringförmige Strömungsstrecke (4) zwischen einer die rohrförmige Strömungsstrecke (5) begrenzenden Innenwandung und einer die ringförmige Strömungsstrecke (4) begrenzenden Außenwandung ausgebildet ist, wobei in der ringförmigen Strömungsstrecke (4) zumindest ein ringförmiger Wabenkörper angeordnet ist, und wobei zumindest eine ringförmige Heizscheibe (23) in der ringförmigen Strömungsstrecke angeordnet ist, wobei die Heizscheibe (23) mittels zumindest zweier elektrischer Durchführungen (24) welche an der Außenwandung angeordnet sind, elektrisch kontaktierbar ist, **dadurch gekennzeichnet, dass** die Heizscheibe (23) aus zwei Heizscheibenhälften gebildet ist..

2. Vorrichtung nach Anspruch 1, **dadurch gekennzeichnet, dass** die Heizscheibe (23) durch zumindest einen elektrischen Leiter gebildet ist, welcher in einem die Heizscheibe (23) definierenden scheibenförmigen Bereich innerhalb der ringförmigen Strömungsstrecke (4) angeordnet ist.

3. Vorrichtung nach einem der vorhergehenden Ansprüche, **dadurch gekennzeichnet , dass** jedes der beiden Enden des Leiters (26) mit jeweils einer der elektrischen Durchführungen (24) in elektrisch leitendem Kontakt steht.

4. Vorrichtung nach Anspruch 1, **dadurch gekennzeichnet , dass** die Heizscheibenhälften an mit den elektrischen Durchführungen (24) leitend verbundenen elektrisch leitfähigen Brückenelementen (25) miteinander verbunden sind.

## Claims

1. Device for the aftertreatment of exhaust gases from an emission source, in particular an internal combustion engine, with a first tubular flow section (5), a deflecting region and a second annular flow section (4), the annular flow section (4) being formed between an inner wall delimiting the tubular flow section (5) and an outer wall delimiting the annular flow section (4), at least one annular honeycomb body being arranged in the annular flow section (4), and at least one annular heating disc (23) being arranged in the annular flow section, wherein the heating disc (23) can be electrically contacted by means of at least two electrical feedthroughs (24), which are arranged on the outer wall, **characterized in that** the heating disc (23) is formed from two heating disc halves.

2. Device according to Claim 1, **characterized in that** the heating disc (23) is formed by at least one electrical conductor, which is arranged in a disc-shaped region defining the heating disc (23) within the annular flow section (4).

3. Device according to one of the preceding claims, **characterized in that** each of the two ends of the conductor (26) is in electrically conductive contact in each case with one of the electrical feedthroughs (24) .

4. Device according to Claim 1, **characterized in that** the heating disc halves are connected to one another at electrically conductive bridge elements (25) which are conductively connected to the electrical feedthroughs (24).

## Revendications

1. Dispositif de post-traitement de gaz d'échappement d'une source d'émission, en particulier d'un moteur à combustion interne, comprenant un premier trajet d'écoulement tubulaire (5), une zone de renvoi et un deuxième trajet d'écoulement annulaire (4), dans lequel le trajet d'écoulement annulaire (4) est réalisé entre une paroi intérieure limitant le trajet d'écoulement tubulaire (5) et une paroi extérieure limitant le trajet d'écoulement annulaire (4), dans lequel au moins un corps en nid d'abeille annulaire est disposé dans le trajet d'écoulement annulaire (4), et dans lequel au moins un disque chauffant annulaire (23) est disposé dans le trajet d'écoulement annulaire, dans lequel le disque chauffant (23) peut être mis en contact électrique au moyen d'au moins deux traversées électriques (24) qui sont disposées sur la paroi extérieure,
**caractérisé en ce que** le disque chauffant (23) est formé par deux moitiés de disque chauffant.

2. Dispositif selon la revendication 1, **caractérisé en ce que** le disque chauffant (23) est formé par au moins un conducteur électrique qui est disposé dans une zone en forme de disque définissant le disque chauffant (23) à l'intérieur du trajet d'écoulement annulaire (4) .

3. Dispositif selon l'une quelconque des revendications précédentes, **caractérisé en ce que** chacune des deux extrémités du conducteur (26) est en contact électriquement conducteur avec respectivement l'une des traversées électriques (24).

4. Dispositif selon la revendication 1, **caractérisé en ce que** les moitiés de disque chauffant sont reliées ensemble au niveau d'éléments de pontage électriquement conducteurs (25) reliés de manière conductrice aux traversées électriques (24).
